# EUROPÄISCHE PATENTSCHRIFT

(11) **EP 1 693 141 B1**
(45) Veröffentlichungstag und Bekanntmachung des Hinweises auf die Patenterteilung: **06.07.2011**
(21) Anmeldenummer: 05022780.0
(22) Anmeldetag: 19.10.2005
(51) Int. Cl.: B23K 26/03

(54) **Anordnung und Verfahren zur ortsaufgelösten Temperaturmessung bei einem Laserbearbeitungsverfahren**
Arrangement and process for localised temperature measurement in a laser treatment process
Dispositif et procédé de mesure localisée de température au cours d'un procédé de traitement laser

(30) Priorität: 20.10.2004 DE 102004051876
(43) Veröffentlichungstag der Anmeldung: 23.08.2006
(73) Patentinhaber: Fraunhofer-Gesellschaft zur Förderung der angewandten Forschung e.V., 80686 München (DE)
(72) Erfinder: Bonss, Steffen, 98544 Zella-Mehlis (DE); Hannweber, Jan, 01277 Dresden (DE); Karsunke, Udo, 04741 Rosswein (DE); Seifert, Marko, 01309 Dresden (DE)
(74) Vertreter: Pfenning, Meinig & Partner GbR

(56) Entgegenhaltungen:
- EP-A- 0 904 886
- DE-A1- 10 225 450
- DE-A1- 19 716 293
- DE-A1- 19 927 803
- DE-B4- 10 243 411
- US-A- 5 382 770
- US-A- 5 659 479

## Beschreibung

Die Erfindung betrifft ein System gemäß dem Oberbegriff des Anspruchs 1 sowie ein Verfahren zur ortsaufgelösten Temperaturmessung bei einem Laserbearbeitungsverfahren unter Verwendung eines solchen Systems. Die US5 382 770A offenbart ein solches System und ein solches Verfahren. Sie kann bei den unterschiedlichsten Laserbearbeitungsverfahren, wie beispielsweise dem Laserstrahlhärten, dem Laserstrahlschweißen auch dem Laserstrahlauftragsschweißen sowie bei Laserschneidverfahren eingesetzt werden.

Bei den in Rede stehenden Bearbeitungsverfahren ist es häufig gewünscht und auch erforderlich, die Temperaturen innerhalb eines vorgegebenen Bearbeitungsbereiches bei der Bearbeitung zu bestimmen, um beispielsweise Rückschlüsse auf die jeweils einzuhaltende Qualität bei der Bearbeitung, die Einhaltung bestimmter Bearbeitungsparameter, aber auch für die Regelung für die Bearbeitung erhalten zu können.

Da sich während der Bearbeitung die Temperaturen an den unterschiedlichen Positionen eines jeweiligen Bearbeitungsbereiches in Abhängigkeit einiger Parameter, wie beispielsweise der jeweiligen Leistung, die bei der Bearbeitung eingesetzt wird, der Auslenkgeschwindigkeit und/oder -richtung von Laserarbeitsstrahlen und dem jeweils zu bearbeitenden Werkstück zeitlich und lokal verändern, ist eine ortsaufgelöste Bestimmung von Temperaturen innerhalb eines Bearbeitungsbereiches gewünscht.

Herkömmliche Pyrometer sind zwar für eine berührungslose Temperaturbestimmung geeignet. Eine ortsaufgelöste Temperaturbestimmung ist aber nicht bzw. mit hohem Positionier- und Justageaufwand eines Pyrometers möglich, wobei im letztgenannten Fall für eine ortsaufgelöste Temperaturbestimmung eine erhebliche Zeit erforderlich ist.

Eine ortsaufgelöste Temperaturbestimmung ist prinzipiell mit ebenfalls an sich bekannten Termographiesystemen möglich, wobei hierfür aber erhebliche Kosten für die Beschaffung und den Betrieb solcher Systeme erforderlich sind.

Des Weiteren ist aus EP 0 904 886 A1 ein Verfahren zur Geometrieerkennung und -verfolgung bei der thermischen Bearbeitung von Bauteilen mittels Laserstrahlung bekannt. Dabei wird ein im Bauteil durch Prozesswärme erzeugtes Temperaturfeld über ein photothermisches Sensorsystem in seiner zweidimensionalen Projektion erfasst. Hierfür wird eine Anordnung mit einem Bandpassfilter, einer Blende und einer Linse eingesetzt, um Temperaturstrahlung auf eine Lochblende zu fokussieren, der ein Infrarotdetektor nachgeordnet ist. Die Linse und Lochblende sollen in Strahlrichtung bzw. senkrecht zu dieser hin und her bewegt werden können, so dass der Infrarotdetektor in den jeweiligen Auftreffpunkten des Arbeitslaserstrahlfleckes die Temperatur unmittelbar messen kann.

Ein solcher Messaufbau ist aufwendig aufgebaut und er muss außerdem gesteuert betrieben werden, so dass in jedem Fall eine Anpassung an das jeweilige Bearbeitungsverfahren und das zu bearbeitende Werkstück erfolgen muss.

In US 5 382 770 A ist ein Laserbearbeitungssystem mit einer Kontrolle der Bewegung des Laserbrennflecks bekannt. Dabei wird ein Laserstrahl über mehrere Spiegel und einen Strahlteiler auf ein Werkstück gerichtet. Für eine Beobachtung der Bearbeitung ist ein Mikroskop und es ist außerdem eine CCD-Kamera für Infrarotstrahlung vorhanden.

Das US 5 659 479 A betrifft eine Anordnung und ein Verfahren zur Echtzeitüberwachung bei einer Laserbearbeitung. Dabei wird eine Videokamera eingesetzt.

Es ist daher Aufgabe der Erfindung eine einfache Lösung vorzuschlagen, mit der eine ortsaufgelöste Temperaturbestimmung innerhalb eines vorgebbaren Bearbeitungsbereiches bei einer Laserbearbeitung kostengünstig und mit geringer Zeitkonstante möglich ist.

Erfindungsgemäß wird diese Aufgabe mit einem System, das die Merkmale des Anspruchs 1 aufweist und einem Verfahren gemäß Anspruch 9 gelöst.

Vorteilhafte Ausgestaltungsformen und Weiterbildungen der Erfindung können mit den in den untergeordneten Ansprüchen bezeichneten Merkmalen erreicht werden.

Die erfindungsgemäße System ist dabei so ausgebildet, dass ein vorgebbarer Bearbeitungsbereich eines Werkstückes auf einem ortsaufgelöst messenden optischen Detektor abgebildet wird. Außerdem ist im Strahlengang von vom vorgebbaren Bearbeitungsbereich emittierter elektromagnetischer Strahlung zwischen dem jeweiligen Bearbeitungsbereich und dem optischen Detektor mindestens ein die elektromagnetische Strahlung eines oder mehrerer Laserarbeitsstrahls/-strahlen sperrendes optisches Filter angeordnet.

Dabei kann der auf dem optischen Detektor abzubildende vorgebbare Bearbeitungsbereich bezüglich seiner geometrischen Randkontur und Größe dem jeweiligen Laserbearbeitungsverfahren und gegebenenfalls auch bei der Bearbeitung einzuhaltender Bearbeitungsparameter angepasst werden.

Als ortsaufgelöst messende optische Detektoren können beispielsweise CCD-Arrays oder auch CMOS-Arrays, bevorzugt jedoch CCD-Kameras eingesetzt werden. Besonders bevorzugt ist bei solchen ortsaufgelöst messenden optischen Detektoren eine erhöhte Sensitivität im Bereich der elektromagnetischen Strahlung des sichtbaren, des nahen infraroten und gegebenenfalls auch des infraroten Lichtes.

Für viele Anwendungsfälle sollte das mindestens eine optische Filter so ausgewählt werden, dass es für elektromagnetische Strahlung mit kleinerer Wellenlänge, als der Wellenlänge der elektromagnetischen Strahlung des einen Laserarbeitsstrahls bzw. auch mehrerer Laserarbeitsstrahlen sein. Für den Fall, dass mehrere Laserarbeitsstrahlen von unterschiedlichen Laserstrahlungsquellen eingesetzt worden sind, sollte das jeweilige optische Filter dann für elektromagnetische Strahlung mit kleinerer Wellenlänge, als die der elektromagnetischen Strahlung des Laserarbeitsstrahls mit ebenfalls kleinerer Wellenlänge ausgewählt werden.

Es ist aber auch möglich, wenn für die Laserarbeitsstrahlen elektromagnetische Strahlung mit weit voneinander entfernt liegenden Wellenlängen eingesetzt werden, je zwei optische Filter einzusetzen, so dass Transparenz für elektromagnetische Strahlung im Wellenlängenbereich zwischen den beiden Wellenlängen der Laserarbeitsstrahlen erreicht werden kann.

So können auch Kantenfilter als optische Filter eingesetzt werden, die dann bevorzugt für kleinere Wellenlängen, als die der Laserarbeitsstrahlen transparent sind.

Mit zwei entgegengesetzt ausgerichteten Kantenfiltern kann aber auch ein quasi "Bandpassfilter" im Wellenlängenbereich zwischen den beiden entsprechend entgegengesetzt ausgebildeten Kantenfiltern, also zwischen einer minimalen und einer maximalen Wellenlänge der jeweils beiden Kantenfilter ausgebildet werden.

Es können aber auch reine Bandpassfilter eingesetzt werden, wobei schmalbandige Bandpassfilter zu bevorzugen sind.

Unabhängig davon, ob ein Bandpassfilter oder zwei Kantenfilter eingesetzt werden, soll das jeweilige Wellenlängenintervall, in dem Transparenz für die elektromagnetische Strahlung, die vom Bearbeitungsbereich emittiert wird, transparent ist, eine maximale Bandbreite von 50 nm, bevorzugt maximal 20 nm und besonders bevorzugt maximal 10 nm aufweisen.

Im Extremfall kann auch ein optisches Filter ausgewählt werden, das lediglich für eine einzige Wellenlänge transparent ist.

Günstig ist es, insbesondere in Verbindung mit einer CCD_Kamera, als optischen Detektor, ein optisches Filter, das unterhalb von 850 nm transparent ist einzusetzen.

Das erfindungsgemäße System kann vorteilhaft so ausgebildet sein, dass die sensitiven Elemente des jeweiligen optischen Detektors, beispielsweise die einzelnen Pixel einer CCD-Kamera an eine elektronisch Auswerteeinheit angeschlossen sind, mit der dann eine Weiterverarbeitung der jeweiligen mit den sensitiven Elementen bestimmten Einzeltemperaturwerte möglich ist.

Für eine Regelung der jeweiligen Laserbearbeitung kann eine Regeleinheit in die angesprochene elektronische Auswerteeinheit integriert oder auch an diese Auswerteeinheit angeschlossen sein.

Die Regelung kann in unterschiedlichster Form, bevorzugt jedoch eine Leistungsregelung der Laserarbeitsstrahlen sein. Alternativ kann aber auch die Pulsfrequenz, die Leistungsdichte im Brennfleck durch entsprechende Strahlformung und/oder die Auslenkgeschwindigkeit/-richtung von Laserarbeitsstrahlen erfolgen.

Bei der ortsaufgelösten Temperaturmessung im jeweiligen vorgebbaren Bearbeitungsbereich wird mit den einzelnen sensitiven Elementen des optischen Detektors jeweils eine Intensität von einzelnen Positionskoordinaten des Bearbeitungsbereich emittierter elektromagnetischer Strahlung detektiert und als Maß für die jeweilige Temperatur bestimmt. Mit den so bestimmten einzelnen Temperaturmesswerten können unterschiedliche Auswertungen, die wie bereits angesprochen auch für die Regelung der Laserbearbeitungsparameter ausgenutzt werden können, durchgeführt werden.

Im einfachsten Fall kann die Bestimmung einer maximalen Temperatur im Bearbeitungsbereich durchgeführt werden und dies durchaus eine ausreichende Information liefern kann.

Selbstverständlich besteht auch die Möglichkeit, die jeweilige maximale und/oder minimale Temperatur des Bearbeitungsbereiches zu bestimmen, wobei dann auch die jeweilige Position der ermittelten maximalen und minimalen Temperatur am Bearbeitungsbereich bestimmt werden sollte.

Die Auswertung kann aber auch in der Form erfolgen, dass für bestimmte Temperaturen, wobei dies auch für Temperaturintervalle zutreffen kann, deren Verteilung bzw. auch eine entsprechende Schwerpunktbestimmung von Temperaturen ermittelt werden kann.

Mit der erfindungsgemäßen Lösung ist es relativ einfach und in kurzer Zeit möglich, auch sich lokal verändernde Temperaturen im jeweiligen Bearbeitungsbereich zu bestimmen, wodurch dann auch Aussagen über sich ändernde Arbeitsbedingungen, die bearbeitungsprozessspezifisch oder auch infolge des jeweiligen Werkstückes, was insbesondere dessen geometrische Gestalt betrifft, erhalten werden können.

Eine Auswertung der ortsaufgelöst bestimmten Temperaturen kann aber auch so erfolgen, dass mit sensitiven Elementen erfasste Messwerte ausgewertet werden, die einen vorgegebenen Schwellwert überschreiten und so weitere Aussagen bezüglich der Erwärmung des Werkstückes innerhalb des Bearbeitungsbereiches durch die Laserbearbeitung erhalten werden können.

Dabei kann zusätzlich auch die jeweilige Größe, die Position und/oder geometrische Gestalt einer oder mehrerer Fläche(n) des Bearbeitungsbereiches mit Temperaturen, die eine vorgegebene maximale Temperatur überschreiten, bestimmt werden, wodurch weitere Erkenntnisse für die momentane Bearbeitung des Werkstückes gewonnen werden können, die dann wieder für die Regelung des Prozesses genutzt werden können. Auch hier können sich ändernde Größen, Positionen und/oder geometrische Gestalten solcher Flächen, in denen die vorgegebene maximale Temperatur überschritten worden ist, bestimmt werden und dann gegebenenfalls auch Aussagen über die Wärmeleitfähigkeit des Werkstückes an der jeweiligen zu bearbeitenden Position erhalten werden.

Für eine Kalibrierung des eingesetzten optischen Detektors kann bevorzugt ein so genannter "schwarzer Strahler" eingesetzt werden.

Um die Flexibilität beim Einsatz der Erfindung zu erhöhen, ist es ebenfalls günstig, das eine oder auch mehrere optische Filter austauschbar vorzusehen, so dass für die jeweilige Applikation ein oder mehrere optisches/optische Filter eingesetzt werden können, deren Transparenz, die jeweilige vom Bearbeitungsbereich emittierte elektromagnetische Strahlung und die Wellenlänge(n) eines oder mehrere Laserarbeitsstrahles/-strahlen berücksichtigt werden kann/können.

Dabei kann ein solches optisches Filter zusätzlich in dem entsprechenden Strahlengang angeordnet werden, dass elektromagnetische Strahlung einer charakteristischen Spektrallinie eines im/am Werkstoff eines zu bearbeitenden Werkstückes vorkommenden chemischen Elementes sperrt, so dass diese elektromagnetische Strahlung keinen Messfehler bei der ortsaufgelösten Temperaturbestimmung hervorrufen kann.

Mit der erfindungsgemäßen Lösung ist eine zuverlässige und mit geringer Zeitkonstante einhergehende ortsaufgelöste Temperaturbestimmung bei einer Laserbearbeitung von Werkstücken möglich. Da es sich um an sich herkömmliche Einzelkomponenten handelt, ist auch eine Kostenreduzierung, zumindest für die Anschaffung einer solchen Anordnung zu verzeichnen.

Nachfolgend soll die Erfindung beispielhaft näher erläutert werden.

Dabei zeigen:
- Figur 1: ein Beispiel eines erfindungsgemäßen Sys- tems, in perspektivischer Darstellung, bei dem ein ortsaufgelöst messender optischer Detektor in einem schräg geneigten Winkel auf einen Bearbeitungsbereich eines Werk- stückes gerichtet ist und
- Figur 2: ein weiteres Beispiel eines erfindungsgemä- ßen Systems, bei dem die Abbildung eines Bearbeitungsbereiches eines Werkstückes über ein Strahlteilerelement auf einen ortsaufgelöst messenden optischen Detektor erfolgt.

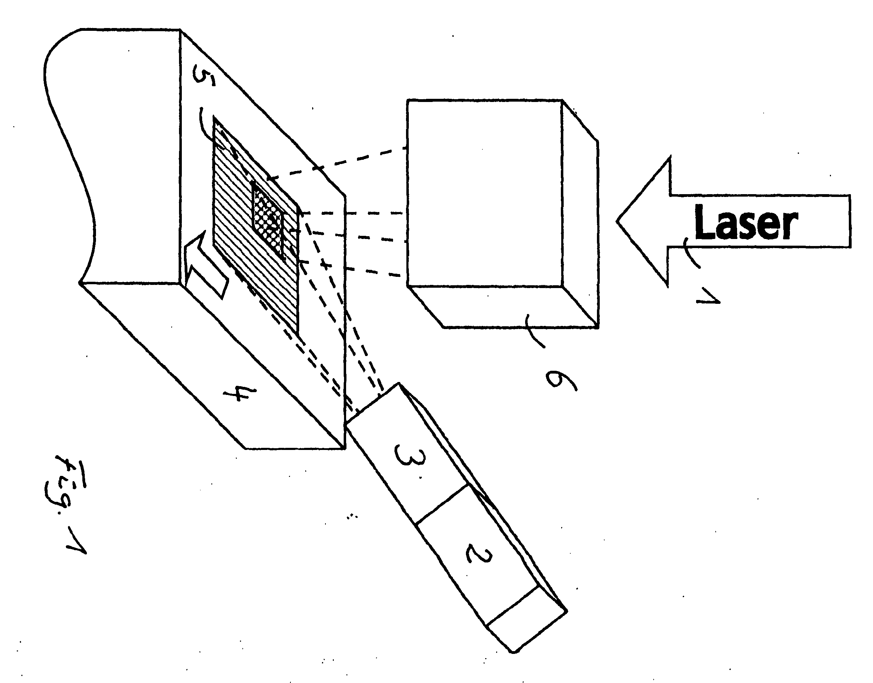

In Figur 1 ist ein Beispiel eines erfindungsgemäßen Systems gezeigt, bei dem ein Laserarbeitsstrahl 1 über eine Strahlformungseinheit 6 auf die Oberfläche eines Werkstückes 4 gerichtet ist. Dabei wurde in diesem Falle mit der Strahlformungseinheit 6 ein rechteckiger Brennfleck ausgebildet.

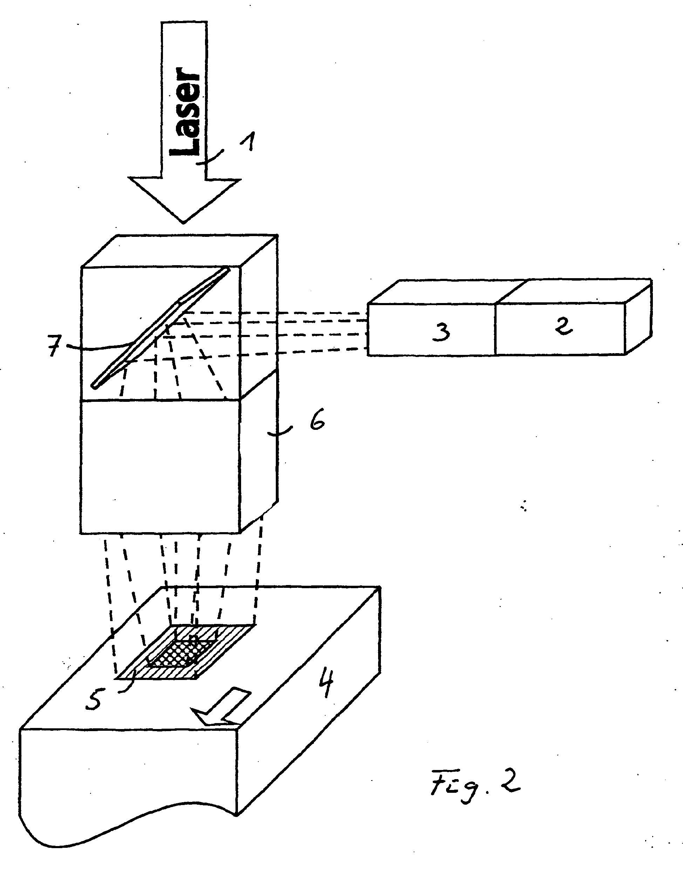

Bei dem in Figur 2 gezeigten Beispiel ist auf eine Auslenkung des Laserarbeitsstrahls 1 verzichtet worden und die Relativbewegung zwischen Brennfleck des Laserarbeitsstrahls 1 und Werkstück 4, wird ausschließlich durch entsprechende translatorische Bewegung des Werkstückes 4, wie mit dem Pfeil angedeutet, erreicht.

Ein vorgegebener Bearbeitungsbereich 5 auf der zu bearbeitenden Oberfläche des Werkstückes 4 wird dann auf einen ortsaufgelöst messenden optischen Detektor 2 abgebildet, vor dem ein optisches Filter 3 angeordnet ist, das für elektromagnetische Strahlung, die im Wellenlängenbereich unterhalb der jeweiligen Wellenlänge der elektromagnetischen Strahlung des Laserarbeitsstrahls 1 liegt, transparent ist.

Hier wurde ebenfalls eine rechteckige Form des Bearbeitungsbereiches 5 gewählt, der auf den ortsaufgelöst messenden optischen Detektor 2, hier eine herkömmliche CCD-Kamera abgebildet wird.

Selbstverständlich sind bei der Laserbearbeitung auch andere Brennfleckgeometrien, Brennfleckdimensionierungen und dabei dann auch entsprechende Geometrien und Flächengrößen des jeweiligen abgebildeten Bearbeitungsbereiches 5 möglich.

Bei diesem Beispiel wurde ein Laserarbeitsstrahl 1 ausgewählt, der eine elektromagnetische Strahlung mit einer Wellenlänge von 940 nm aufweist.

Dementsprechend ist das eingesetzte optische Filter 3 lediglich im Wellenlängenbereich zwischen 730 und 750 nm transparent.

Das in Figur 2 gezeigte Beispiel eines erfindungsgemäßen Systems unterscheidet sich vom Beispiel nach Figur 1 lediglich dadurch, dass im Strahlengang des hier einen Laserarbeitsstrahles 1 zusätzlich ein Strahlteiler 7 angeordnet ist, über den die vom Bearbeitungsbereich 5 emittierte elektromagnetische Strahlung orthogonal abgelenkt und so der Bearbeitungsbereich 5 nach der Ablenkung durch den Strahlteiler 7 auf den ortsaufgelöst messenden optischen Detektor 2, nach Durchgang durch das optische Filter 3, abgebildet wird.

In nicht dargestellter Form, werden die einzelnen Intensitäten, je nach lokaler Auflösung des ortsaufgelöst messenden optischen Detektors 2 mit seinen jeweiligen sensitiven Elementen bestimmt und als Maß für die jeweiligen lokal differenzierten Temperaturmesswerte genutzt, gemäß den Ausführungen im allgemeinen Teil der Beschreibung ausgewertet und gegebenenfalls für die Regelung des jeweiligen Laserbearbeitungsprozesses benutzt.

## Patentansprüche

1. System mit einer Anordnung zur ortsaufgelösten Temperaturmessung bei einem Laserbearbeitungsverfahren und einem oder mehreren Laserarbeitsstrahl/-strahlen,
bei dem ein vorgebbarer Bearbeitungsbereich (5) eines Werkstückes auf einen ortsaufgelöst messenden optischen Detektor (2) abgebildet und im Strahlengang zwischen dem Bearbeitungsbereich (5) und dem optischen Detektor (2) mindestens ein die elektromagnetische Strahlung des oder der mehreren Laserarbeitsstrahls/-strahlen (1) sperrendes optisches Filter (3) angeordnet ist **dadurch gekennzeichnet, dass** das optische Filter (3) für ein Wellenlängenintervall mit einer Bandbreite von maximal 50 nm transparent ist oder das optische Filter ein Kantenfilter ist und zwei im Strahlengang angeordnete Kantenfilter für ein Wellenlängenintervall mit einer Bandbreite von maximal 50 nm transparent sind.

2. System nach Anspruch 1, **dadurch gekennzeichnet, dass** der ortsaufgelöst messende optische Detektor (2) eine CCD-Kamera, ein CCD-Array oder ein CMOS-Array ist.

3. System nach Anspruch 1 oder 2, **dadurch gekennzeichnet, dass** das optische Filter (3) für elektromagnetische Strahlung mit kleinerer Wellenlänge, als die Wellenlänge(n) der elektromagnetischen Strahlung des/der Laserarbeitsstrahls/-strahlen (1) transparent ist.

4. System nach einem der vorhergehenden Ansprüche, **dadurch gekennzeichnet, dass** das optische Filter (3) ein Bandpassfilter ist.

5. System nach einem der vorhergehenden Ansprüche, **dadurch gekennzeichnet, dass** sensitive Elemente des optischen Detektors (2) jeweils einzeln an eine elektronische Auswerteeinheit angeschlossen sind.

6. System nach einem der vorhergehenden Ansprüche, **dadurch gekennzeichnet, dass** eine Regelung der Leistung des/der Laserarbeitsstrahls/-strahlen (1) in die elektronische Auswerteeinheit integriert oder an diese angeschlossen ist.

7. System nach einem der vorhergehenden Ansprüche **dadurch gekennzeichnet, dass** das/die optische(n) Filter (3) im Wellenlängenbereich unterhalb von 850 nm zumindest innerhalb eines Wellenlängenbereiches transparent ist/sind.

8. System nach einem der vorhergehenden Ansprüche, **dadurch gekennzeichnet, dass** zusätzlich mindestens ein weiteres optisches Filter im Strahlengang angeordnet ist, das elektromagnetische Strahlung einer charakteristischen Spektrallinie eines im/am Werkstoff eines zu bearbeitenden Werkstückes (4) vorkommenden chemischen Elementes sperrt.

9. Verfahren zur ortsaufgelösten Temperaturmessung bei einem Laserbearbeitungsverfahren unter Verwendung eines Systems nach einem der Ansprüche 1 bis 8, **dadurch gekennzeichnet, dass** vom vorgegebenen Bearbeitungsbereich (5) emittierte und innerhalb eines Wellenlängenintervalls mit einer Bandbreite von maximal 50 nm gefilterte elektromagnetische Strahlung auf den ortsaufgelöst messenden optischen Detektor (2) gerichtet ist und die jeweilige Intensität der elektromagnetischen Strahlung jeweils mit den einzelnen sensitiven Elementen des optischen Detektors (2) als Maß für die jeweilige Temperatur an jeweiligen Positionen des Bearbeitungsbereiches (5) bestimmt wird.

10. Verfahren nach Anspruch 9, **dadurch gekennzeichnet, dass** elektromagnetische Strahlung mit einer Wellenlänge oder innerhalb eines Wellenlängenbereichs auf den optischen Detektor (2) gerichtet wird, die kleiner als die Wellenlänge des einen oder mehrerer Laserarbeitsstrahls/-strahlen (1) ist.

11. Verfahren nach Anspruch 9 oder 10, **dadurch gekennzeichnet, dass** die maximale Temperatur im jeweiligen Bearbeitungsbereich (5) bestimmt wird.

12. Verfahren nach Anspruch 9 bis 11, **dadurch gekennzeichnet, dass** mit den bestimmten Temperaturen eine Verteilung oder eine Schwerpunktbestimmung von Temperaturen im jeweiligen Bearbeitungsbereich (5) ermittelt wird.

13. Verfahren nach Anspruch 9 bis 12, **dadurch gekennzeichnet, dass** sich lokal verändernde Temperaturen im jeweiligen Bearbeitungsbereich (5) bestimmt werden.

14. Verfahren nach Anspruch 9 bis 13, **dadurch gekennzeichnet, dass** die Anzahl von mit sensitiven Elementen des optischen Detektors (2) ortsaufgelöst bestimmten Temperaturen, die einen vorgegebenen Schwellwert überschreiten, bestimmt wird.

15. Verfahren nach Anspruch 9 bis 14, **dadurch gekennzeichnet, dass** die jeweilige Größe, Position und/oder geometrische Gestalt einer oder mehrerer Fläche(n) des Bearbeitungsbereiches (5) mit Temperaturen, die eine vorgegebene maximale Temperatur überschreiten, bestimmt wird.

16. Verfahren nach Anspruch 9 bis 15, **dadurch gekennzeichnet, dass** die maximale und die minimale Temperatur und/oder die Position der maximalen und minimalen Temperatur des Bearbeitungsbereiches (5) bestimmt werden.

17. Verfahren nach Anspruch 9 bis 16, **dadurch gekennzeichnet, dass** mit den bestimmten Temperaturen des Bearbeitungsbereiches (5) eine Regelung des einen oder mehrerer Laserarbeitsstrahls/- strahlen (1) durchgeführt wird.

18. Verfahren nach Anspruch 9 bis 17, **dadurch gekennzeichnet, dass** für eine Kalibrierung des optischen Detektors (2) ein schwarzer Strahler verwendet wird.

19. Verfahren nach Anspruch 9 bis 18, **dadurch gekennzeichnet, dass** mindestens ein optisches Filter (3) austauschbar im Strahlengang zwischen Bearbeitungsbereich (5) und optischen Detektor (2) eingesetzt wird.

## Claims

1. System having an arrangement for locally resolved temperature measurement in a laser processing method and in one or more laser working beam/beams,
in which a predefinable processing region (5) of a workpiece is imaged onto an optical detector (2) which measures in a locally resolved manner and at least one optical filter (3) which blocks the electromagnetic radiation of the or the plurality of laser working beam/beams (1) is arranged in the beam path between the processing region (5) and the optical detector (2), **characterised in that** the optical filter (3) is transparent to a wavelength interval with a bandwidth of at most 50 nm or the optical filter is a cut-off filter and two cut-off filters arranged in the beam path are transparent to a wavelength interval with a bandwidth of at most 50 nm.

2. System according to Claim 1, **characterised in that** the optical detector (2) which measures in a locally resolved manner is a CCD camera, a CCD array or a CMOS array.

3. System according to Claim 1 or 2, **characterised in that** the optical filter (3) is transparent to electromagnetic radiation with a smaller wavelength than the wavelength(s) of the electromagnetic radiation of the laser working beam/beams (1).

4. System according to one of the preceding claims, **characterised in that** the optical filter (3) is a bandpass filter.

5. System according to one of the preceding claims, **characterised in that** sensitive elements of the optical detector (2) are each individually connected to an electronic evaluation unit.

6. System according to one of the preceding claims, **characterised in that** a regulation of the power of the laser working beam/beams (1) is integrated into or connected to the electronic evaluation unit.

7. System according to one of the preceding claims, **characterised in that** the optical filter(s) (3) is/are transparent in the wavelength range below 850 nm, at least within one wavelength range.

8. System according to one of the preceding claims, **characterised in that** additionally at least one further optical filter is arranged in the beam path, which filter blocks electromagnetic radiation of a characteristic spectral line of a chemical element occurring in/on the material of a workpiece (4) to be processed.

9. Method for locally resolved temperature measurement in a laser processing method using a system according to one of Claims 1 to 8, **characterised in that** electromagnetic radiation emitted from the predefined processing region (5) and filtered within a wavelength interval with a bandwidth of at most 50 nm is directed at the optical detector (2) which measures in a locally resolved manner and the respective intensity of the electromagnetic radiation is respectively determined by the individual sensitive elements of the optical detector (2) as a measure of the respective temperature at respective positions of the processing region (5).

10. Method according to Claim 9, **characterised in that** electromagnetic radiation with a wavelength or within a wavelength range which is less than the wavelength of the one or more laser working beam/beams (1) is directed at the optical detector (2).

11. Method according to Claim 9 or 10, **characterised in that** the maximum temperature in the respective processing region (5) is determined.

12. Method according to Claim 9 to 11, **characterised in that** a distribution or a concentration of temperatures in the respective processing region (5) is established using the determined temperatures.

13. Method according to Claim 9 to 12, **characterised in that** locally varying temperatures in the respective processing region (5) are determined.

14. Method according to Claim 9 to 13, **characterised in that** the number of temperatures which are determined in a locally resolved manner by sensitive elements of the optical detector (2) and exceed a predefined threshold value is determined.

15. Method according to Claim 9 to 14, **characterised in that** the respective size, position and/or geometrical form of one or more area(s) of the processing region (5) with temperatures which exceed a predefined maximum temperature is determined.

16. Method according to Claim 9 to 15, **characterised in that** the maximum and the minimum temperature and/or the position of the maximum and minimum temperature of the processing region (5) are determined.

17. Method according to Claim 9 to 16, **characterised in that** a regulation of the one or more laser working beam/beams (1) is carried out using the determined temperatures of the processing region (5).

18. Method according to Claim 9 to 17, **characterised in that** a black radiator is used for calibration of the optical detector (2).

19. Method according to Claim 9 to 18, **characterised in that** at least one optical filter (3) is inserted exchangeably in the beam path between the processing region (5) and the optical detector (2).

## Revendications

1. Système pourvu d'un aménagement de mesure de température avec résolution locale dans un procédé d'usinage par laser et avec un ou plusieurs faisceau(x) laser d'usinage,
dans lequel une zone d'usinage (5) prédéterminable d'une pièce d'ouvrage est représentée sur un détecteur optique (2) qui donne des mesures avec résolution locale et dans lequel au moins un filtre optique (3) bloquant le rayonnement électromagnétique du faisceau ou des plusieurs faisceaux laser d'usinage est disposé, sur la trajectoire du faisceau, entre la zone d'usinage (5) et le détecteur optique (2), **caractérisé en ce que** le filtre optique (3) est transparent pour un intervalle de longueurs d'onde avec une largeur de bande de 50 nm au maximum ou **en ce que** le filtre optique est un filtre de détection de bords et deux filtres de détection de bords, disposés sur la trajectoire du faisceau, sont transparents pour un intervalle de longueurs d'onde avec une largeur de bande de 50 nm au maximum.

2. Système selon la revendication 1, **caractérisé en ce que** le détecteur optique (2) qui donne des mesures avec résolution locale est une caméra CCD, un réseau CCD ou un réseau CMOS.

3. Système selon la revendication 1 ou 2, **caractérisé en ce que** le filtre optique (3) est transparent pour un rayonnement électromagnétique avec une longueur d'onde inférieure à la longueur d'onde ou aux longueurs d'onde du rayonnement électromagnétique du faisceau ou des faisceaux laser d'usinage (1).

4. Système selon l'une quelconque des revendications précédentes, **caractérisé en ce que** le filtre optique (3) est un filtre passe-bande.

5. Système selon l'une quelconque des revendications précédentes, **caractérisé en ce que** les éléments sensitifs du détecteur optique (2) sont chacun connectés individuellement à une unité d'exploitation électronique.

6. Système selon l'une quelconque des revendications précédentes, **caractérisé en ce qu'**un réglage de puissance du faisceau ou des faisceaux laser d'usinage (1) est intégré à l'unité d'exploitation électronique ou connectée à celle-ci.

7. Système selon l'une quelconque des revendications précédentes, **caractérisé en ce que** le ou les filtres optiques (3) est ou sont transparent(s), dans la plage de longueurs d'onde d'en dessous de 805 nm, à l'intérieur d'une plage de longueurs d'onde au moins.

8. Système selon l'une quelconque des revendications précédentes, **caractérisé en ce qu'**au moins un autre filtre optique est disposé en plus sur la trajectoire du faisceau, qui bloque le rayonnement électromagnétique d'une raie spectrale caractéristique d'un élément chimique apparaissant dans ou sur le matériau d'une pièce d'ouvrage à usiner (4).

9. Procédé de mesure de température avec résolution locale dans un procédé d'usinage par laser en utilisant un système selon une quelconque des revendications 1 à 8, **caractérisé en ce que** du rayonnement électromagnétique émis par la zone d'usinage prédéterminée (5) et filtrée à l'intérieur d'un intervalle de longueurs d'onde avec une largeur de bande de 50 nm au maximum est dirigé sur le détecteur optique (2) qui donne des mesures avec résolution locale et **en ce que** l'intensité respective du rayonnement électromagnétique est respectivement déterminée par les éléments sensitifs individuels du détecteur optique (2) comme mesure de la température respective aux positions respectives de la zone d'usinage (5).

10. Procédé selon la revendication 9, **caractérisé en ce que** le rayonnement électromagnétique est dirigé sur le détecteur optique (2) avec une longueur d'onde ou à l'intérieur d'une plage de longueurs d'onde qui est ou sont inférieure(s) à la longueur d'onde d'un faisceau ou des faisceaux laser d'usinage (1).

11. Procédé selon la revendication 9 ou 10, **caractérisé en ce que** la température maximale est déterminée dans la zone d'usinage respective (5).

12. Procédé selon les revendications 9 à 11, **caractérisé en ce que** l'on établit, avec les températures définies, une répartition ou une détermination du centre de gravité des températures dans la zone d'usinage respective (5).

13. Procédé selon les revendications 9 à 12, **caractérisé en ce que** des températures variant localement sont déterminées dans la zone d'usinage respective (5).

14. Procédé selon les revendications 9 à 13, **caractérisé en ce que** l'on détermine le nombre de températures définies avec résolution locale à l'aide des éléments sensitifs du détecteur optique (2) qui dépassent une valeur de seuil prédéterminée.

15. Procédé selon les revendications 9 à 14, **caractérisé en ce que** l'on détermine la grandeur, la position et/ou la forme géométrique respectives d'une ou plusieurs surfaces de la zone d'usinage (5) avec des températures qui dépassent une température maximale prédéterminée.

16. Procédé selon les revendications 9 à 15, **caractérisé en ce que** l'on détermine la température maximale et la température minimale et/ou la position de la température maximale et de la température minimale de la zone d'usinage (5).

17. Procédé selon les revendications 9 à 16, **caractérisé en ce que** l'on effectue un réglage du faisceau ou des faisceaux laser d'usinage (1) avec les températures déterminées de la zone d'usinage (5).

18. Procédé selon les revendications 9 à 17, **caractérisé en ce que** l'on utilise un émetteur à rayonnement noir pour le calibrage du détecteur optique (2).

19. Procédé selon les revendications 9 à 18, **caractérisé en ce que** l'on installe, de manière échangeable, au moins un filtre optique (3) sur la trajectoire du faisceau, entre la zone d'usinage (5) et le détecteur optique (2).
